# EUROPEAN PATENT APPLICATION

(11) **EP 4 737 161 A1**
(43) Date of publication of application: **06.05.2026**
(21) Application number: 24831759.6
(22) Date of filing: 18.06.2024
(51) Int. Cl.: B60K 1/04, B62D 51/04

(54) **WORK VEHICLE**

(30) Priority: 28.06.2023 JP 2023106172
(71) Applicant: Kubota Corporation, Osaka 556-8601 (JP)
(72) Inventor: ISHIKAWA, Junichi, Sakai-shi, Osaka 590-0908 (JP); HIRAOKA, Minoru, Sakai-shi, Osaka 590-0908 (JP); YAMANAKA, Yukifumi, Sakai-shi, Osaka 590-0908 (JP); YOSHII, Kaichiro, Sakai-shi, Osaka 590-0908 (JP); IDA, Yusuke, Sakai-shi, Osaka 590-0908 (JP); HAZAWA, Yuhei, Sakai-shi, Osaka 590-0908 (JP); JINNOUCHI, Katsutoshi, Sakai-shi, Osaka 590-0908 (JP); NIKI, Ryota, Sakai-shi, Osaka 590-0908 (JP); YAMAGISHI, Ryota, Sakai-shi, Osaka 590-0908 (JP)
(74) Representative: Cabinet Beau de Loménie
(86) International application number: PCT/JP2024/021954
(87) International publication number: WO 2025/004897

(57) **Abstract**

A work vehicle includes a hydraulic device (C) and a battery (10A). The battery (10A) is held by a lower portion of a body (3), below the hydraulic device (C) and between right and left travel devices.

## Description

### Technical Field

The present invention relates to a work vehicle.

### Background Art

Patent Literature 1 discloses a work vehicle including travel devices (traveling wheels) disposed on right and left sides of a body (a body frame) of the work vehicle, and a hydraulic device (a hydraulic pump of a hydraulic pressure supply source).

### Citation List

### Patent Literature

Patent Literature 1: Japanese Unexamined Patent Application Publication No. 2023-768

### Summary of Invention

### Technical Problem

When a work vehicle includes an engine, exhaust gases are emitted from the engine. The exhaust gases may accumulate in enclosed spaces like vinyl greenhouses. There is a demand for work vehicles capable of operating in conditions where engine exhaust gases are not emitted, or where the amount of exhaust emissions is minimized even if exhaust gases are emitted.

The present invention provides a work vehicle which allows operation in conditions where exhaust gases are not emitted, or where the amount of exhaust emissions is minimized even if exhaust gases are emitted, and which can easily perform operations.

### Solution to Problem

A work vehicle according to the present invention includes: right and left travel devices disposed on right and left sides of a body of the work vehicle; a hydraulic device; and a battery held by a lower portion of the body, below the hydraulic device and between the right and left travel devices.

In this configuration, the work vehicle can adopt a power source driven by electric power supplied from the battery. Hereby, the work vehicle does not require an engine and can operate with no emission of exhaust gases. Even in a case where the work vehicle includes an engine in addition to the power source driven by electric power, the engine can be a small engine in comparison with a case where the work vehicle includes only an engine. This allows the work vehicle to operate with a small amount of exhaust emissions even if exhaust gases are emitted.

Since the battery is held by the lower portion of the body, below the hydraulic device and between right and left travel devices, the work vehicle can have a center of gravity at a low position, between right and left contact points with the ground in a plan view, so that the work vehicle can travel easily and stably even on uneven ground and can operate easily.

In the present invention, the hydraulic device may include a hydraulic pump, the work vehicle may further include an electric motor configured to drive the hydraulic pump, and the hydraulic pump and the electric motor may be disposed right above the battery.

In this configuration, the hydraulic pump and the electric motor can be disposed not to protrude outside the body beyond an area where the battery is located in a plan view. This allows the hydraulic pump, the electric motor, and the battery to be disposed collectively in a plan view.

In the present invention, the electric motor may include an attachment plate and may be held by the body by the attachment plate being coupled to a stay provided in the body, and the hydraulic pump may be attached to the attachment plate and held by the body.

In this configuration, the electric motor includes the attachment plate, which is more easily coupled to a stay than a body of the electric motor, and the electric motor is held by the body of the work vehicle by coupling the attachment plate to the stay. Hereby, the electric motor can be easily attached to the body. Since the attachment plate is used as a stay to which the hydraulic pump is attached, it is not necessary to provide an extra stay for the hydraulic pump, thereby achieving a reduction in cost.

In the present invention, the work vehicle may further include an inverter disposed above the battery and connected to the electric motor.

In this configuration, operations such as inspection of the inverter can be performed above the battery, so that maintenance on the inverter is easily performable.

In the present invention, the work vehicle may further include a protection circuit section for the inverter, disposed above the battery.

In this configuration, operations such as inspection of the protection circuit section can be performed above the battery, so that maintenance on the protection circuit section is easily performable.

In the present invention, the work vehicle may further include a charger provided in the body and capable of charging the battery with electric power supplied from an external device provided outside the body.

In this configuration, in response to electric power being supplied to the charger from an external device provided outside the body, the battery is charged by the charger. As a result, the battery can be easily charged while the battery remains held by the body. This achieves easy charging of the battery.

In the present invention, the work vehicle may further include guide rails provided in the body and extending in a front-rear direction of the body over a battery storage space in the body and a battery loading-unloading opening of the body, the guide rails allowing the battery to move between the battery storage space and the battery loading-unloading opening.

In this configuration, at the time when the battery is unloaded from the body, the battery is moved along the guide rails from the battery storage space to the battery loading-unloading opening, so that the battery can be easily drawn out of the battery loading-unloading opening. At the time when the battery is loaded onto the body, the battery is moved along the guide rails from the battery loading-unloading opening into the battery storage space, so that the battery can be easily put into the battery storage space. This allows the battery to be easily loaded and unloaded.

In the present invention, the work vehicle may further include an oil cooler disposed rearward of the battery storage space in the front-rear direction of the body, and the battery loading-unloading opening may be disposed forward of the battery storage space in the front-rear direction of the body.

In this configuration, the oil cooler does not become obstructive at the time when the battery is loaded and unloaded, which eliminates removal of the oil cooler.

In the present invention, each of the right and left travel devices may include a front wheel and a rear wheel, and the front wheel and the rear wheel may be held by the body while the front wheel and the rear wheel are independently liftable and lowerable relative to the body.

In this configuration, in a case where an operation site tilts in a right-left direction of the body or in the front-rear direction of the body, for example, each of the front wheels and the rear wheels on the right and left sides is lifted or lowered, so that the height position of each of the front wheels and the rear wheels on the right and left sides relative to the body is adjusted to a height position corresponding to the tilt of the operation site. Hereby, the body is adjusted to a horizontal or substantially horizontal posture regardless of the tilt of the operation site. That is, even on uneven ground, the body can be maintained to be in a horizontal or substantially horizontal posture by lifting and lowering of the front wheels and the rear wheels on the right and left sides.

### Brief Description of Drawings

Fig. 1 is a side view of a work vehicle viewed from the left side;
Fig. 2 is a plan view of the work vehicle;
Fig. 3 is a side view illustrating a first battery, a hydraulic pump, an electric motor, and the like;
Fig. 4 is a plan view illustrating the first battery, the hydraulic pump, the electric motor, and the like;
Fig. 5 is a front view illustrating the first battery, the hydraulic pump, and the like;
Fig. 6 is a view illustrating a drive structure for the travel devices; and
Fig. 7 is a side view illustrating a coupling mechanism.

### Description of Embodiments

Embodiments as examples of the present invention will be described below with reference to the drawings.

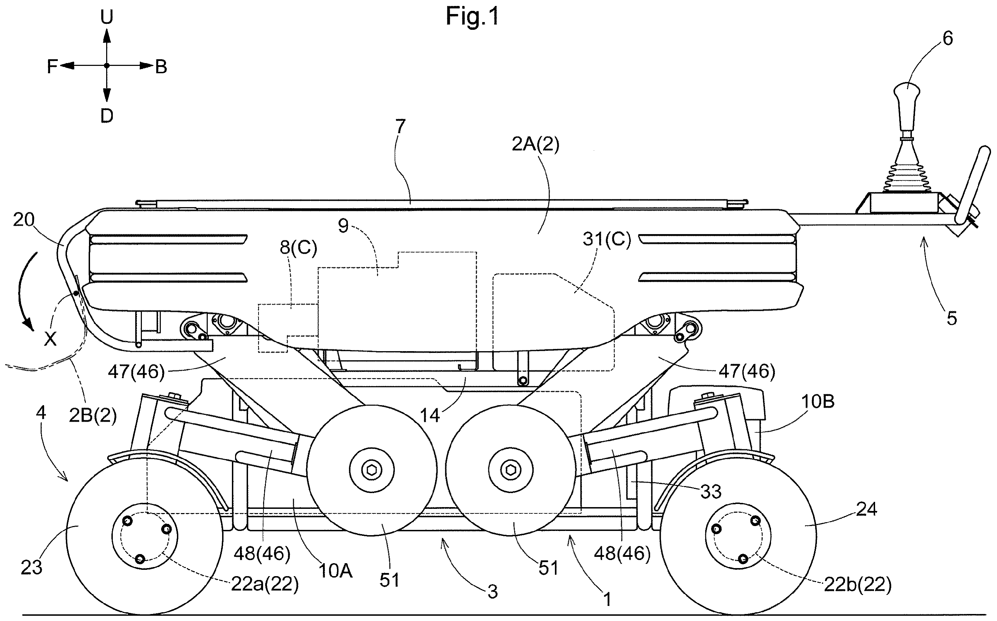

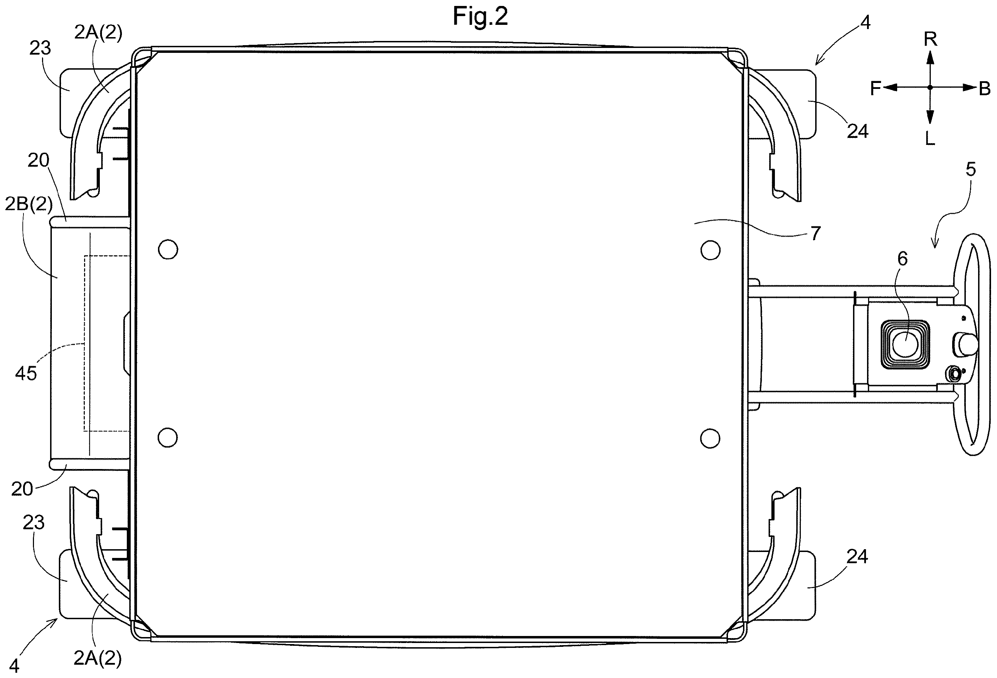

Figs. 1, 2 illustrate a work vehicle for transferring a container and the like. In the following description, in terms of the body of the work vehicle, the direction of arrow F in Figs. 1, 2 indicates "the front side of the body," the direction of arrow B in Figs. 1, 2 indicates "the rear side of the body," the direction of arrow U in Fig. 1 indicates "the upper side of the body," the direction of arrow D in Fig. 1 indicates "the lower side of the body," the direction of arrow L in Fig. 2 indicates "the left side of the body," and the direction of arrow R illustrated in Fig. 2 indicates "the right side of the body."

### [Overview of Work Vehicle]

As illustrated in Figs. 1, 2, the work vehicle includes a body 3 including a body frame 1 constituted by a plurality of steel materials such as steel pipes coupled to each other, a cover 2 configured to cover an upper portion of the body frame 1, and the like. The body 3 is supported by right and left travel devices 4 disposed on right and left sides of the body 3 and travels by the right and left travel devices 4. An operation section 5 is extended rearward from an upper portion of the body 3. The operation section 5 includes a steering lever 6 for performing a traveling operation for the body 3, and the like. A loading deck 7 on which a container or the like is placeable is provided in the upper portion of the body 3. The loading deck 7 is disposed above the cover 2. A hydraulic pump 8, an electric motor 9, and the like for driving the travel devices 4 are provided below the loading deck 7. A first battery 10A, a second battery 10B, and the like are provided in a lower portion of the body 3. The first battery 10A is a power source configured to drive the travel devices 4. The second battery 10B is a power source for control and outputs electric power at a lower voltage than the voltage of electric power output from the first battery 10A.

### [Driving of Travel Device]

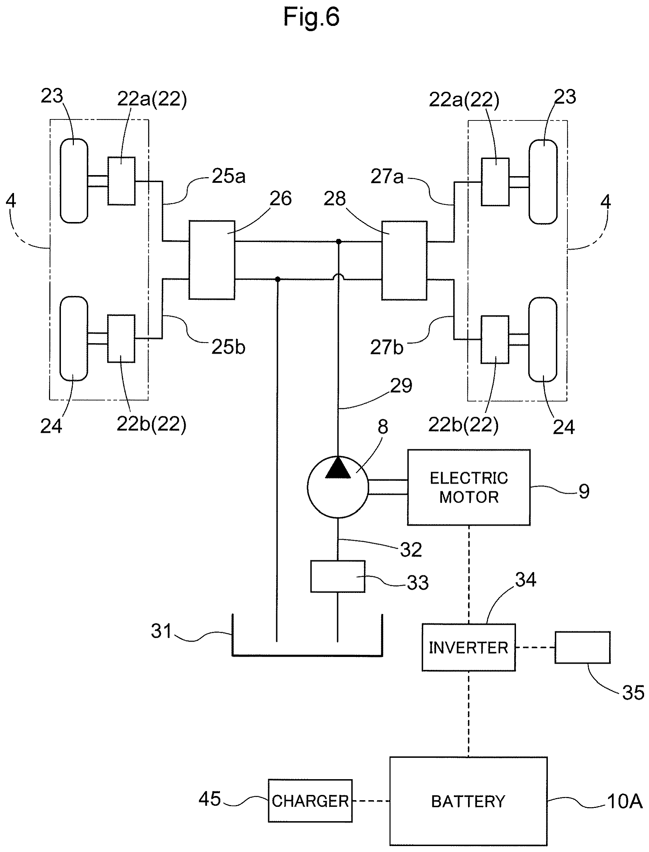

As illustrated in Fig. 6, each of the right and left travel devices 4 includes a hydraulic motor 22. The left travel device 4 is driven by a left hydraulic motor 22, and the right travel device 4 is driven by a right hydraulic motor 22.

More specifically, as illustrated in Figs. 1, 5, or 6, each of the right and left travel devices 4 includes a front wheel 23 and a rear wheel 24. The hydraulic motor 22 for the left travel device 4 includes a hydraulic motor 22a for the left front wheel and a hydraulic motor 22b for the left rear wheel. The left front wheel 23 is driven by the hydraulic motor 22a for the left front wheel, and the left rear wheel 24 is driven by the hydraulic motor 22b for the left rear wheel. The hydraulic motor 22 for the right travel device 4 includes a hydraulic motor 22a for the right front wheel and a hydraulic motor 22b for the right rear wheel. The right front wheel 23 is driven by the hydraulic motor 22a for the right front wheel, and the right rear wheel 24 is driven by the hydraulic motor 22b for the right rear wheel.

In each of the hydraulic motor 22a for the left front wheel, the hydraulic motor 22b for the left rear wheel, the hydraulic motor 22a for the right front wheel, and the hydraulic motor 22b for the right rear wheel, an output shaft of the hydraulic motor 22a for the front wheel is coupled to an axle of the front wheel 23, and an output shaft of the hydraulic motor 22b for the rear wheel is coupled to an axle of the rear wheel 24. Hereby, the front wheel 23 is drivable by the hydraulic motor 22a for the front wheel, and the rear wheel 24 is drivable by the hydraulic motor 22b for the rear wheel.

As illustrated in Fig. 6, a left motor control valve 26 is connected to a left-front operation oil passage 25a provided for the hydraulic motor 22a for the left front wheel, and a left-rear operation oil passage 25b provided for the hydraulic motor 22b for the left rear wheel. A right motor control valve 28 is connected to a right-front operation oil passage 27a provided for the hydraulic motor 22a for the right front wheel, and a right-rear operation oil passage 27b provided for the hydraulic motor 22b for the right rear wheel. A hydraulic pump 8 is connected to the left motor control valve 26 and the right motor control valve 28 via an oil supply passage 29. The hydraulic pump 8 and a hydraulic oil tank 31 are connected to each other via an oil suction passage 32. The oil suction passage 32 includes an oil cooler 33. The electric motor 9 is coupled to the hydraulic pump 8 such that they operate in conjunction, and the first battery 10A is connected to the electric motor 9 via an inverter 34. The inverter 34 includes a protection circuit section 35. The protection circuit section 35 prevents a capacitor provided for the inverter 34 from being damaged by the inflow of heavy-current. The protection circuit section 35 includes a fuse.

Direct-current power accumulated in the first battery 10A is supplied to the inverter 34 and is converted into alternating-current power, and the alternating-current power is supplied from the inverter 34 to the electric motor 9, so that the electric motor 9 is driven. The hydraulic pump 8 is driven by the electric motor 9, so that hydraulic oil accumulated in the hydraulic oil tank 31 is extracted to the hydraulic pump 8 via the oil suction passage 32. The hydraulic pump 8 extracts the hydraulic oil from the hydraulic oil tank 31 via the oil cooler 33 in such a manner that the hydraulic oil cooled by the oil cooler 33 is extracted by the hydraulic pump 8. The hydraulic oil thus extracted is supplied from the hydraulic pump 8 to the left motor control valve 26 and the right motor control valve 28 via the oil supply passage 29. The hydraulic oil is supplied from the left motor control valve 26 to the hydraulic motor 22a for the left front wheel, so that the hydraulic motor 22a for the left front wheel is driven, and the left front wheel 23 is driven by the hydraulic motor 22a for the left front wheel. The hydraulic oil is supplied from the left motor control valve 26 to the hydraulic motor 22b for the left rear wheel, so that the hydraulic motor 22b for the left rear wheel is driven, and the left rear wheel 24 is driven by the hydraulic motor 22b for the left rear wheel. The hydraulic oil is supplied from the right motor control valve 28 to the hydraulic motor 22a for the right front wheel, so that the hydraulic motor 22a for the right front wheel is driven, and the right front wheel 23 is driven by the hydraulic motor 22a for the right front wheel. The hydraulic oil is supplied from the right motor control valve 28 to the hydraulic motor 22b for the rear wheel, so that the hydraulic motor 22b for the right rear wheel is driven, and the right rear wheel 24 is driven by the hydraulic motor 22b for the right rear wheel.

In the present embodiment, each of the right and left travel devices 4 includes the front wheel 23 and the rear wheel 24 such that the front wheel 23 is driven by the hydraulic motor 22a for the front wheel, and the rear wheel 24 is driven by the hydraulic motor 22b for the rear wheel. However, each of the right and left travel devices 4 may include a crawler, and one hydraulic motor for driving the crawler.

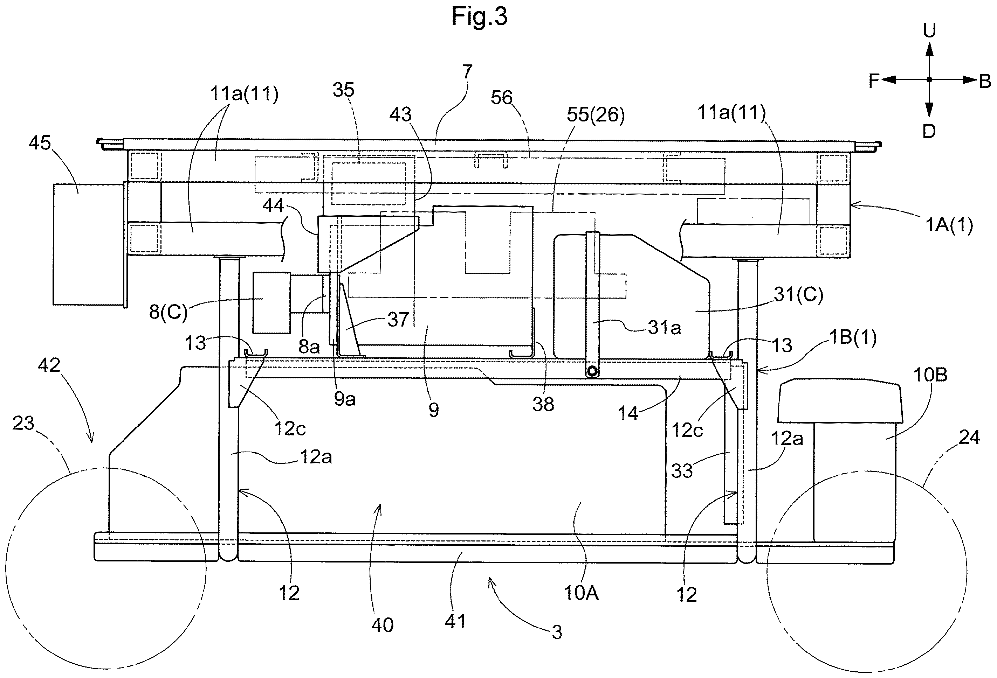

As illustrated in Figs. 3, 4, 5, the body frame 1 includes a first frame 1A disposed in the upper portion of the body frame 1, and a second frame 1B extending downward from the first frame 1A.

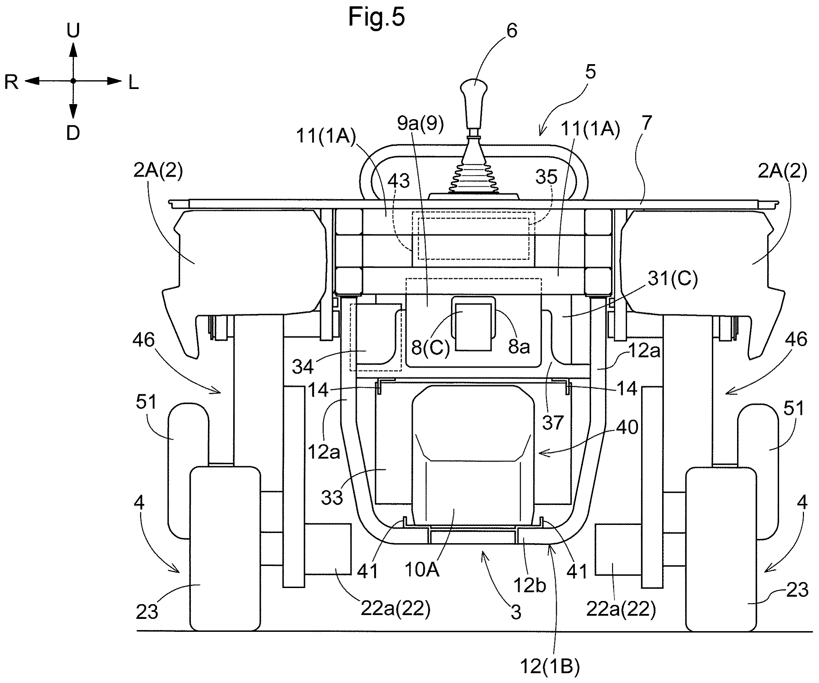

As illustrated in Figs. 3, 5, the first frame 1A includes two first frame sections 11 arranged at an interval in the up-down direction. Each of the two first frame sections 11 includes steel materials, e.g., front-and-rear-oriented square steel pipe materials 11a extending in the front-rear direction of the body, and laterally-oriented square steel pipe materials coupling the front-and-rear-oriented square steel pipe materials 11a to each other, as illustrated in Figs. 3, 4, 5. The two first frame sections 11 are coupled to each other at both lateral ends of their front end portions and at both lateral ends of their rear end portions. In an upper first frame section 11 out of the two first frame sections 11, right and left front-and-rear-oriented square steel pipe materials 11a are coupled to each other by coupling members 11b provided at three separated positions in an intermediate portion of the upper first frame section 11 in the front-rear direction.

As illustrated in Figs. 3, 5, the second frame 1B includes two vertical frames 12 extending downward along the up-down direction of the body from two separated positions, in the front-rear direction, of a lower first frame section 11 out of the two first frame sections 11.

As illustrated in Fig. 5, each of the two vertical frames 12 is formed in a U-shape facing upward and includes right and left vertically-oriented frame sections 12a extending downward from both side portions of the lower first frame section 11, and a laterally-oriented frame section 12b coupling lower portions of the right and left vertically-oriented frame section 12a to each other.

As illustrated in Figs. 3, 5, in each of the two vertical frames 12, respective intermediate portions, in the up-down direction, of the right and left vertically-oriented frame sections 12a are coupled to each other by a laterally-oriented coupling frame 13. Both end portions of the laterally-oriented coupling frame 13 are coupled to the vertically-oriented frame sections 12a such that the end portions of the laterally-oriented coupling frame 13 are coupled to respective supports 12c of the vertically-oriented frame sections 12a by coupling bolts.

As illustrated in Fig. 3, an intermediate portion, in the up-down direction, of the left vertically-oriented frame section 12a in a front vertical frame 12 out of the two vertical frames 12 is coupled to an intermediate portion, in the up-down direction, of the left vertically-oriented frame section 12a in a rear vertical frame 12 out of the two vertical frames 12, by a left front-and-rear-oriented coupling frame 14. An intermediate portion, in the up-down direction, of the right vertically-oriented frame section 12a in the front vertical frame 12 out of the two vertical frames 12 is coupled to an intermediate portion, in the up-down direction, of the right vertically-oriented frame section 12a in the rear vertical frame 12 out of the two vertical frames 12, by a right front-and-rear-oriented coupling frame 14. Front end portions of the right and left front-and-rear-oriented coupling frames 14 are coupled to the vertically-oriented frame sections 12a in the front vertical frame 12 such that respective front end portions of the front-and-rear-oriented coupling frames 14 are coupled to respective end portions of the front laterally-oriented coupling frame 13. Rear end portions of the right and left front-and-rear-oriented coupling frames 14 are coupled to the vertically-oriented frame sections 12a in the rear vertical frame 12 such that respective rear end portions of the front-and-rear-oriented coupling frames 14 are coupled to respective end portions of the rear laterally-oriented coupling frame 13. The two vertical frames 12 are formed by round steel pipe materials bent in a U-shape, thereby reducing the weight of the body frame 1.

### [Hydraulic Pump, Hydraulic Oil Tank, Electric Motor, First Battery]

As illustrated in Fig. 3, the hydraulic pump 8, the electric motor 9, and the hydraulic oil tank 31 are provided below the loading deck 7. The hydraulic pump 8 and the hydraulic oil tank 31 serve as a hydraulic device C. As illustrated in Figs. 1, 3, 4, 5, the first battery 10A is held by the lower portion of the body 3, below the hydraulic devices C and the electric motor 9 and between the right and left travel devices 4. The first battery 10A, which tends to be heavier than the hydraulic device C and the electric motor 9, is disposed between the right and left travel devices 4, below the hydraulic device C and the electric motor 9, so that the first battery 10A is disposed at a position that lowers the center of gravity of the whole work vehicle and at a position between the right and left travel devices 4 in a plan view.

More specifically, as illustrated in Fig. 3, a first stay 37 is projected upward from front portions of the right and left front-and-rear-oriented coupling frames 14 of the second frame 1B, and a second stay 38 is disposed behind the first stay 37 and projected upward from the right and left front-and-rear-oriented coupling frames 14. An attachment plate 9a provided in a front portion of the electric motor 9 is coupled to the first stay 37 by coupling bolts, and a rear portion of the electric motor 9 is coupled to the second stay 38 by coupling bolts. The electric motor 9 is attached to the right and left front-and-rear-oriented coupling frames 14 via the first stay 37 and the second stay 38.

As illustrated in Figs. 3, 5, the hydraulic pump 8 includes a flange section 8a provided in a rear portion thereof, and the flange section 8a is coupled to the attachment plate 9a of the electric motor 9 by coupling bolts. The hydraulic pump 8 is attached to the right and left front-and-rear-oriented coupling frames 14 via the attachment plate 9a and the first stay 37.

As illustrated in Figs. 3, 5, the hydraulic oil tank 31 is disposed behind the electric motor 9. The hydraulic oil tank 31 is placed on the right and left front-and-rear-oriented coupling frames 14, fixed to the right and left front-and-rear-oriented coupling frames 14 by a fastening band 31a, and held by the right and left front-and-rear-oriented coupling frames 14.

The hydraulic pump 8 and the hydraulic oil tank 31 as the hydraulic device C are held by the right and left front-and-rear-oriented coupling frames 14 in the body 3.

As illustrated in Figs. 3, 5, in the internal space of the body 3, a battery storage space 40 is defined at a position below the hydraulic device C and the electric motor 9 and between the right and left vertically-oriented frame sections 12a of the vertical frames 12.

As illustrated in Figs. 3, 5, a pair of right and left guide rails 41 are provided at the bottom of the battery storage space 40. The pair of right and left guide rails 41 are attached to the front and rear laterally-oriented frame sections 12b of the second frame 1B and held by the front and rear laterally-oriented frame sections 12b in such a manner as to extend in the front-rear direction of the body 3. As illustrated in Figs. 3, 5, the first battery 10A is placed on the pair of right and left guide rails 41 in the battery storage space 40 and is fixed to the pair of right and left guide rails 41 in response to a fixation mechanism (not illustrated) for fixing the first battery 10A to the guide rails 41 being switched to a fixing state. The first battery 10A is held by the front and rear laterally-oriented frame sections 12b via the pair of right and left guide rails 41 in the battery storage space 40.

The first battery 10A is held by the front and rear laterally-oriented frame sections 12b in the body 3, below the hydraulic device C and the electric motor 9 and between the right and left travel devices 4.

As illustrated in Fig. 3, a battery loading-unloading opening 42 is formed in a portion of the body 3 which portion is separated forward from the battery storage space 40 in the front-rear direction of the body. The pair of right and left guide rails 41 are provided over the battery storage space 40 and the battery loading-unloading opening 42.

At the time when the first battery 10A is unloaded from the body 3, the fixation mechanism (not illustrated) fixing the first battery 10A to the pair of right and left guide rails 41 is switched to a disengaged state, and the first battery 10A is slid forward in the front-rear direction of the body. This allows the first battery 10A to move along the pair of right and left guide rails 41 from the battery storage space 40 to the battery loading-unloading opening 42, so that the first battery 10A can be easily drawn out of the battery loading-unloading opening 42.

At the time when the first battery 10A is loaded onto the body 3, a rear portion of the first battery 10A is placed on front portions of the pair of right and left guide rails 41 in the battery loading-unloading opening 42, and the first battery 10A is slid rearward in the front-rear direction of the body. This allows the first battery 10A to move along the pair of right and left guide rails 41 from the battery loading-unloading opening 42 into the battery storage space 40, so that the first battery 10A can be easily put into the battery storage space 40.

### [Hydraulic Pump and Electric Motor]

As illustrated in Figs. 3, 4, 5, the hydraulic pump 8 and the electric motor 9 are disposed right above the first battery 10A. The hydraulic pump 8 and the electric motor 9 are disposed in an area where the first battery 10A is located in a plan view. This allows the hydraulic pump 8 and the electric motor 9 not to protrude outside the body beyond the area where the first battery 10A is located in a plan view.

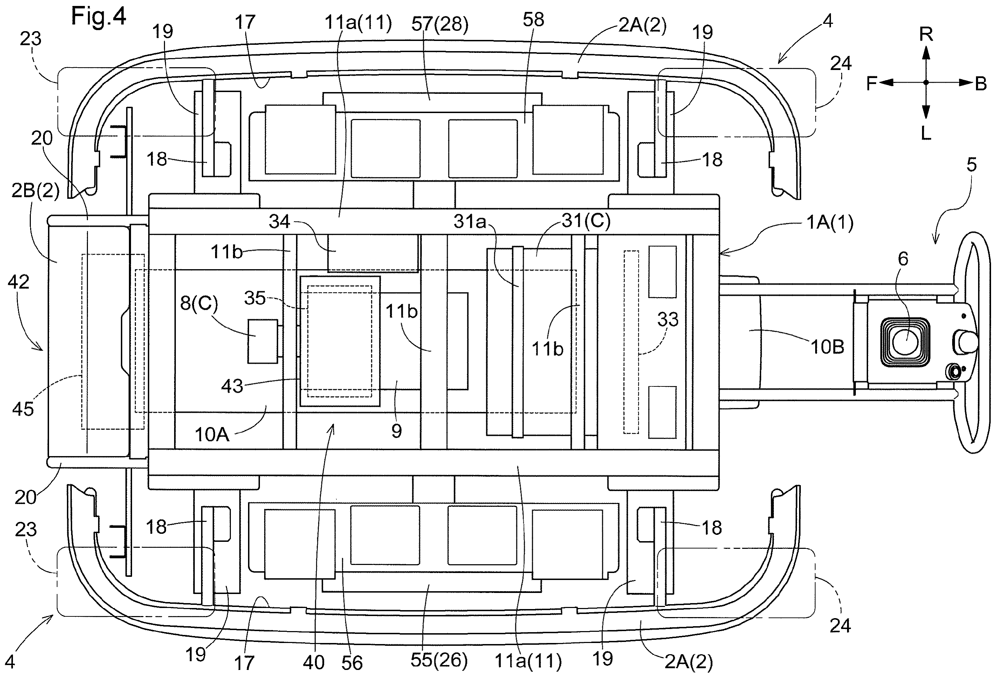

As illustrated in Figs. 3, 4, the hydraulic pump 8 and the electric motor 9 are arranged in the front-rear direction of the body such that the hydraulic pump 8 is disposed forward of the electric motor 9, and the input shaft (not illustrated) of the hydraulic pump 8 and the output shaft (not illustrated) of the electric motor 9 are aligned in the front-rear direction of the body. The input shaft of hydraulic pump 8 is coupled to the output shaft of the electric motor 9 such that they are coaxial with each other. This makes it easy to couple the hydraulic pump 8 to the electric motor 9 in such a manner that they operate in conjunction.

### [Oil Cooler]

As illustrated in Figs. 3, 4, 5, the oil cooler 33 is disposed rearward of the battery storage space 40 in the front-rear direction of the body. The oil cooler 33 is coupled to the rear vertical frame 12 by a coupler provided around the oil cooler 33 and held by the rear vertical frame 12.

Because of this, the oil cooler 33 does not become obstructive at the time when the first battery 10A is loaded and unloaded, which eliminates removal of the oil cooler 33. The oil cooler 33 is disposed forward of the second battery 10B in the front-rear direction of the body.

### [Second Battery]

As illustrated in Figs. 3, 4, the second battery 10B is disposed rearward of the battery storage space 40 in the front-rear direction of the body. Because of this, the second battery 10B does not become obstructive at the time when the first battery 10A is loaded and unloaded, which eliminates removal of the second battery 10B.

### [Inverter]

As illustrated in Figs. 4, 5, the inverter 34 is disposed above the first battery 10A. The inverter 34 is provided on the right side of the electric motor 9. The inverter 34 is attached to a stay (not illustrated) projected upward from the right front-and-rear-oriented coupling frame 14 and is held by the right front-and-rear-oriented coupling frame 14 via the stay.

### [Protection Circuit Section]

As illustrated in Figs. 3, 4, 5, the protection circuit section 35 is disposed above the first battery 10A. The protection circuit section 35 is stored in a box 43 disposed above the electric motor 9. The box 43 is held by a support base 44. The support base 44 is coupled to the attachment plate 9a of the electric motor 9 by coupling bolts and held by the front-and-rear-oriented coupling frames 14 via the attachment plate 9a.

### [Charger]

As illustrated in Fig. 6, the charger 45 is connected to the first battery 10A. The charger 45 includes an extendable charging cord (not illustrated). In response to the charging cord being connected to a power source (not illustrated) at a charging station or the like outside the body 3, electric power is supplied from the power source to the charger 45 via the charging cord, so that the first battery 10A is charged by the charger 45 using the supplied electric power. The first battery 10A can be charged by the charger 45 even when the first battery 10A remains loaded in the body 3.

As illustrated in Figs. 2, 3, 4, the charger 45 is held by the first frame 1A inside a front cover 2B. The front cover 2B is held by a front cover frame 20 and is swingable in the up-down direction between a lowered open position and a raised closed position around a pivot axis X located at a lower portion of the front cover 2B and serving as an opening-closing axis. In response to the front cover 2B being changed to the lowered open position as illustrated by an alternate long and two short dashes line in Fig. 1, the charger 45 is exposed forward, so that the charger 45 is usable.

### [Front Wheels and Rear Wheels]

As illustrated in Figs. 1, 5, in each of the right and left travel devices 4, the front wheel 23 and the rear wheel 24 are held by the body 3 while the front wheel 23 and the rear wheel 24 are independently liftable and lowerable relative to the body.

More specifically, as illustrated in Figs. 1, 5, each of the front wheel 23 and the rear wheel 24 is held by the body frame 1 via a coupling mechanism 46.

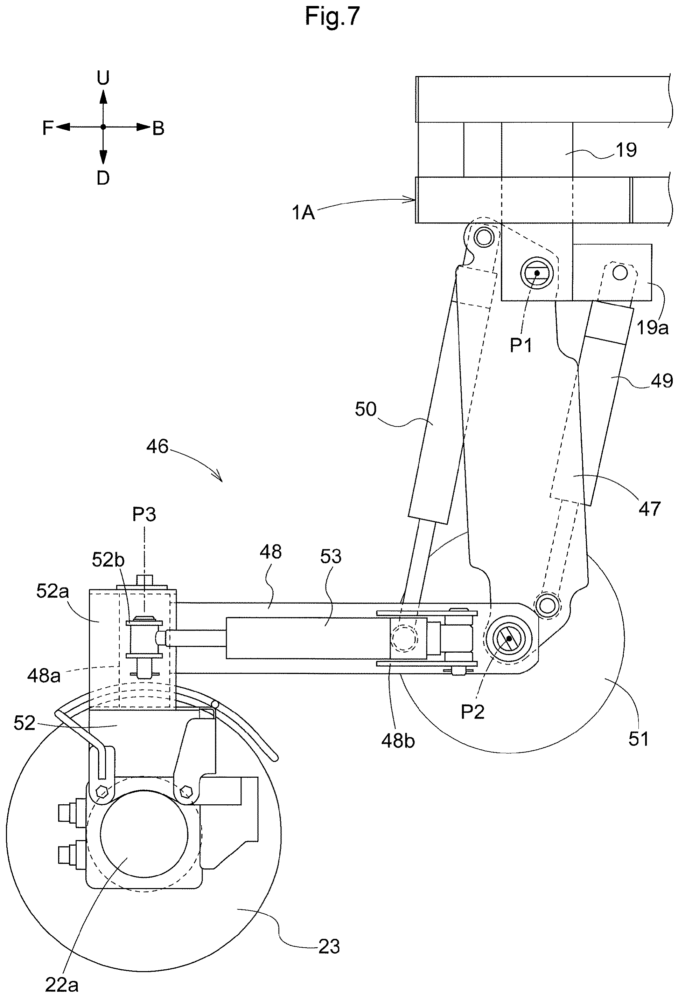

Fig. 7 is a side view of the coupling mechanism 46 for the right front wheel 23 as viewed from the left side. The coupling mechanism 46 for the right front wheel 23 includes an upper link 47 held by a support 19 provided for the first frame 1A in such a manner as to be swingable in the front-rear direction around a pivot axis P1 as a swing pivot point, and a lower link 48 held by a free end portion of the upper link 47 in such a manner as to be swingable in the up-down direction around a pivot axis P2 as a swing pivot point. The front wheel 23 is held by a free end portion of the lower link 48. A first hydraulic cylinder 49 is coupled to a cylinder coupler 19a of the support 19 and the free end portion of the upper link 47. A second hydraulic cylinder 50 is coupled to a base of the upper link 47 and the lower link 48.

The coupling mechanism 46 is lifted and lowered relative to the first frame 1A in synch with the upper link 47 swinging around the pivot axis P1 as the swing pivot point in response to expansion and contraction of the first hydraulic cylinder 49, and the coupling mechanism 46 expands and contracts in synch with the lower link 48 swinging around the pivot axis P2 as the swing pivot point in response to expansion and contraction of the second hydraulic cylinder 50. Hereby, the mounting height of the front wheel 23 relative to the body frame 1 is changed.

Respective coupling mechanisms 46 for the left front wheel 23, the left rear wheel 24, and the right rear wheel 24 are also configured similarly to the coupling mechanism 46 for the right front wheel 23.

In a case where an operation site tilts in the right-left direction of the body or in the front-rear direction of the body, respective mounting heights of the right and left front wheels 23 and the right and left rear wheels 24 relative to the body frame 1 are adjusted in accordance with the tilt of the operation site. This makes it possible to adjust the body 3 to a horizontal or substantially horizontal posture regardless of the tilt of the operation site in the right-left direction of the body and the front-rear direction of the body.

As illustrated in Figs. 1, 5, each of the coupling mechanisms 46 for the left front wheel 23, the left rear wheel 24, the right front wheel 23, and the right rear wheel 24 holds an auxiliary wheel 51. The auxiliary wheel 51 is held to be rotatable around the pivot axis P2 as a rotation center. In response to the swing angle of the upper link 47 and the swing angle of the lower link 48 reaching predetermined swing angles, the auxiliary wheel 51 comes into contact with the ground together with its corresponding front wheel 23 or rear wheel 24 so as to support the body 3.

### [Steering of Front Wheels and Rear Wheels]

As illustrated in Fig. 7, an upper portion 52a of a holding member 52 configured to hold the front wheel 23 and the hydraulic motor 22a is held by a support 48a in a free end portion of the lower link 48 in such a manner as to be swingable around a steering axis P3 as a swing pivot point. A steering cylinder 53 is coupled to a cylinder coupler 52b provided in the upper portion 52a and a cylinder coupler 48b provided in the lower link 48.

The holding member 52 is swingingly operated relative to the lower link 48 around the steering axis P3 as the swing pivot point in response to expansion and contraction of the steering cylinder 53, so that the front wheel 23 is steered. Each of the left front wheel 23, the left rear wheel 24, and the right rear wheel 24 is steered by a steering operation mechanism having the same configuration as the steering operation mechanism of the right front wheel 23.

As illustrated in Fig. 4, a left control valve device 55 which is configured to control the first hydraulic cylinder 49, the second hydraulic cylinder 50, and the steering cylinder 53 for each of the left front wheel 23 and the left rear wheel 24 and which includes a left motor control valve 26, and a left CPU device 56 configured to control the left control valve device 55 are disposed laterally inward of a left lateral cover 2A and held by the first frame 1A. A right control valve device 57 which is configured to control the first hydraulic cylinder 49, the second hydraulic cylinder 50, and the steering cylinder 53 for each of the right front wheel 23 and the right rear wheel 24 and which includes a right motor control valve 28, and a right CPU device 58 configured to control the right control valve device 57 are disposed laterally inward of a right lateral cover 2A and held by the first frame 1A.

### [Cover]

As illustrated in Figs. 1, 4, 5, the cover 2 is disposed below the loading deck 7. As illustrated in Figs. 1, 4, 5, the cover 2 includes the lateral covers 2A disposed laterally outward of the right and left sides of the body frame 1, and the front cover 2B disposed forward and outward of the body frame 1.

As illustrated in FIGS. 3, 4, the right and left lateral covers 2A and the front cover 2B are held by the first frame 1A of the body frame 1.

More specifically, as illustrated in Fig. 4, the lateral cover 2A includes a lateral cover frame 17 attached to the inside of the lateral cover 2A. Coupling arms 18 are extended from two separated positions of the lateral cover frame 17 in the front-rear direction, toward the first frame. A front coupling arm 18 out of the two coupling arms 18 is detachably coupled to the support 19 provided in the front portion of the first frame 1A by coupling bolts. A rear coupling arm 18 out of the two coupling arms 18 is detachably coupled to the support 19 provided in the rear portion of the first frame 1A by coupling bolts.

As illustrated in Figs. 1, 2, 4, the front cover 2B includes front cover frames 20 disposed at right and left side portions of the front cover 2B and configured to hold the front cover 2B. The right and left front cover frames 20 are bent in a lateral U-shape in a side view, along the edge portion of the front cover 2B. An upper rear end portion of each of the right and left front cover frames 20 is coupled to a front end portion of the upper first frame section 11 in the first frame 1A, and a lower rear end portion of each of the right and left front cover frames 20 is coupled to the support 19 provided in the front portion of the first frame 1A.

### [Alternative Embodiments]

(1) The above embodiment has described an example in which the first battery 10A for driving the electric motor 9 is disposed below the hydraulic device C and between the right and left travel devices 4. However, the present invention is not limited to this.
   For example, a battery for control may be provided instead of the first battery 10A, or in a case where an engine is provided, a battery for driving the engine may be provided.
(2) The above embodiment has described an example in which the hydraulic pump 8 is driven only by the electric motor 9. However, an engine may be provided in addition to the electric motor 9, and the hydraulic pump 8 may be driven by power from both the electric motor 9 and the engine.
(3) The above embodiment has described an example in which the travel device 4 includes the front wheel 23 and the rear wheel 24, the front wheel 23 and the rear wheel 24 are individually driven by the hydraulic motors 22a, 22b, and the front wheel 23 and the rear wheel 24 are individually liftable and lowerable. However, the present invention is not limited to this. The travel device 4 may include a crawler drivable by a hydraulic motor.
   Even in a case where the front wheel 23 and the rear wheel 24 are provided, the front wheel 23 and the rear wheel 24 may not be lifted and lowered.
(4) The above embodiment has described an example in which the charger 45 is provided. However, the charger 45 may not be provided.
(5) The above embodiment has described an example in which the hydraulic pump 8 and the electric motor 9 are disposed right above the first battery 10A. However, the hydraulic pump 8 and the electric motor 9 may be disposed to deviate from the position right above the first battery 10A.
(6) The above embodiment has described an example in which the hydraulic pump 8 and the electric motor 9 are arranged in the front-rear direction of the body with the hydraulic pump 8 disposed forward of the electric motor 9, and the input shaft of the hydraulic pump 8 is coupled to the output shaft of the electric motor 9 to be aligned in the front-rear direction of the body. However, the present invention is not limited to this. The hydraulic pump 8 and the electric motor 9 may be arranged in the front-rear direction of the body with the hydraulic pump 8 disposed rearward of the electric motor 9. In the case where the hydraulic pump 8 and the electric motor 9 are arranged in the front-rear direction of the body, the input shaft of hydraulic pump 8 and the output shaft of the electric motor 9 may be aligned in any direction, e.g., laterally in the right-left direction of the body. The hydraulic pump 8 and the electric motor 9 may be arranged in any direction, e.g., laterally in the right-left direction of the body.
(7) The above embodiment has described an example in which the battery loading-unloading opening 42 is disposed forward of the battery storage space 40 in the front-rear direction of the body. However, the battery loading-unloading opening 42 may be disposed rearward of the battery storage space 40 in the front-rear direction of the body.

### Industrial Applicability

The present invention is applicable to work vehicles including right and left travel devices and a hydraulic device, and work vehicles for purposes other than package transportation.

### Description of Reference Numerals

3: body
4: travel device
8: hydraulic pump
9: electric motor
9a: attachment plate
10A: first battery (battery)
23: front wheel
24: rear wheel
33: oil cooler
34: inverter
35: protection circuit section
37: first stay (stay)
40: battery storage space
41: guide rail
42: battery loading-unloading opening
45: charger
C: hydraulic device

## Claims

1. A work vehicle, comprising:
right and left travel devices disposed on right and left sides of a body of the work vehicle;
a hydraulic device; and
a battery held by a lower portion of the body, below the hydraulic device and between the right and left travel devices.

2. The work vehicle according to claim 1, wherein
the hydraulic device includes a hydraulic pump,
the work vehicle further comprises an electric motor configured to drive the hydraulic pump, and
the hydraulic pump and the electric motor are disposed right above the battery.

3. The work vehicle according to claim 2, wherein
the electric motor includes an attachment plate and is held by the body by the attachment plate being coupled to a stay provided in the body, and
the hydraulic pump is attached to the attachment plate and held by the body.

4. The work vehicle according to claim 2 or 3, further comprising:
an inverter disposed above the battery and connected to the electric motor.

5. The work vehicle according to claim 4, further comprising:
a protection circuit section for the inverter, disposed above the battery.

6. The work vehicle according to any one of claims 1 to 5, further comprising:
a charger provided in the body and capable of charging the battery with electric power supplied from an external device provided outside the body.

7. The work vehicle according to any one of claims 1 to 6, further comprising:
guide rails provided in the body and extending in a front-rear direction of the body over a battery storage space in the body and a battery loading-unloading opening of the body, the guide rails allowing the battery to move between the battery storage space and the battery loading-unloading opening.

8. The work vehicle according to claim 7, further comprising:
an oil cooler disposed rearward of the battery storage space in the front-rear direction of the body, wherein
the battery loading-unloading opening is disposed forward of the battery storage space in the front-rear direction of the body.

9. The work vehicle according to any one of claims 1 to 8, wherein
each of the right and left travel devices includes a front wheel and a rear wheel, and
the front wheel and the rear wheel are held by the body while the front wheel and the rear wheel are independently liftable and lowerable relative to the body.
